# EUROPEAN PATENT APPLICATION

(11) **EP 1 808 106 A2**
(43) Date of publication of application: **18.07.2007**
(21) Application number: 07250174.5
(22) Date of filing: 17.01.2007
(51) Int. Cl.: A47G 1/10

(54) **Improvements in or relating to framing**

(30) Priority: 17.01.2006 GB 0600885
(71) Applicant: Art Materials Service Inc., New Brunswick, NJ 08901 (US)
(72) Inventor: Eichert, Joseph Carl, Middlesex, New Jersey 08902 (US); Cubides, Wilson, Somerset, N.J. 08873 (US)
(74) Representative: Moffat, John Andrew

(57) **Abstract**

Improvements in or relating to framing include a bracket suitable for, but not exclusively limited to, joining sections of picture frame together and a fixing screw suitable for fixing a bracket to a section of picture frame.
A bracket is provided for joining a first and second section of picture frame, the bracket comprising a first limb for insertion into a re-entrant channel of the first picture frame section, and a second limb for insertion into a re-entrant channel of the second picture frame section abutting the first picture frame section in use, wherein at least one of said first and second limbs has a cavity therein, and wherein each of said first and second limbs has an aperture therethrough for receiving a threaded screw.
Desirably each cavity of said first and second limbs comprises a domed portion of bracket material.
The domed cavity acts to strengthen the bracket, thus allowing the bracket to be formed from a thinner material compared to equivalent conventional brackets.

## Description

This invention relates to improvements in or relating to framing, specifically to a bracket suitable for, but not exclusively limited to, joining sections of picture frame together. This invention also relates to a pressure plate and to a fixing screw each, of which is suitable for use with the bracket of the invention. The invention also relates to a hanging bracket suitable for, but not exclusively limited to, mounting a picture frame. Finally, this invention relates to a picture frame incorporating any combination of the above-mentioned features.

The term "picture frame" used herein is intended to be construed in a broad manner, to embrace within it other frame structures, for example for framing mirrors, domestic trays and the like where elongate sections of frame material are joined to create the frame. As such, aspects of the invention may be used in relation to signs and display boards, as well as in relation to windows and doorframes.

For the purpose of the present application the frame will be described on the basis that the frame sections are aluminium extrusions, but it is to be understood that the frame sections could be formed from other materials, and by other manufacturing techniques, for example by roll forming other metals, by moulding or casting, or by fabrication from solid sections, for example by machining lengths of wood.

It will be understood that in use a picture frame can be considered to have a front face and a rear face. Through normal use of a picture frame, the front face will be presented to a viewer of the art contained by the picture frame, and the rear face will be presented to the wall upon which the picture frame is hung. Picture frame materials in accordance with the present invention share a common feature, namely a longitudinally extending re-entrant channel in their rear face. Where two lengths of picture frame section are abutted end-to-end to be joined to form, for example, a right-angle corner, their re-entrant channels form a continuous, but not necessarily rectilinear, re-entrant channel in the rear face of the picture frame.

It is known to joint two sections of picture frame by introducing a plate-like jointing bracket into the re-entrant channel of the two sections so that the abutting faces of the two sections are spanned by the jointing bracket and then locking the jointing bracket into the channel on both sides of the abutment of the two sections. Various means have been proposed for locking the opposite ends of the jointing bracket in the two abutting sections, including the use of wedges and clips.

However, a particularly convenient and secure locking of the ends of the bracket in the abutting picture frame sections is achieved by means of screws which extend through correspondingly screw-threaded bores (apertures) in the bracket and abut against the base of the channel so that tightening of the screw raises the bracket to lock beneath the inwardly extending flanges of the mouth of the channel which define the re-entrant nature of the channel. The length of the screw is selected in relation to the depth of the channel in the picture frame section, such that the screw usually has its outer end substantially flush with the outer face of the bracket in the locked condition, and thus does not usually protrude beyond the plane of the rear face of the picture frame sections.

It is known to complement the bracket and screw arrangement with a 'pressure plate'. In use, a pressure plate abuts the base of the channel and the screw abuts the pressure plate, as opposed to the screw directly abutting the base of the channel, as occurs in bracket arrangements where a pressure plate is not used. Use of a pressure plate may ensure a more snug fit of the bracket in the channel, and may act to prevent damage to the channel when torque is applied to the screws during frame assembly.

Recent times have seen a dramatic increase in the cost of steel, the raw material from which many components used in the picture framing industry are manufactured. This cost increase has adversely affected those involved in the picture framing industry, as they have struggled to cope with increased manufacturing costs. The Applicant has sought to find ways of reducing the cost of manufacture of such components. In particular, the Applicant has sought to find ways of using thinner materials for the manufacture of brackets and pressure plates, thus decreasing raw material cost, whilst overcoming the adverse consequences of using a thinner material. These adverse consequences include weakness of the resultant joint and aesthetically displeasing deformations of the bracket, pressure plate and frame channels. Because of the large volumes of components manufactured in this industry, it will be appreciated that a relatively small cost saving per component manufactured has the potential to confer a significant commercial advantage.

One solution to the problem of bracket and pressure plate deformation caused by use of thinner materials is to employ surface hardening of the component material. Although this solution allows cost savings in terms of raw material consumption, any cost savings are counteracted by the expense of the surface hardening, causing this to be an unsatisfactory solution.

Thus, aspects of the present invention have been devised in order to address the problems associated with using thinner materials, whilst still benefiting from a reduction in raw material costs. Further aspects of the invention have been devised in order to save other manufacturing costs, for example, labour costs.

In accordance with a first aspect of the present invention there is provided a bracket for joining a first and a second section of picture frame, the bracket comprising a first limb for insertion into a re-entrant channel of the first picture frame section, and a second limb for insertion into a re-entrant channel of the second picture frame section abutting the first picture frame section in use, wherein at least one of said first and second limbs has a cavity therein, and wherein each of said first and second limbs has an aperture therethrough for receiving a threaded screw.

Preferably each of said first and second limbs has a cavity therein.
Desirably, each cavity of said first and second limbs comprises a domed portion of bracket material. The domed cavity acts to strengthen the bracket, thus allowing the bracket to be formed from a thinner material compared to equivalent conventional brackets. This reduces the cost of raw materials required for bracket manufacture whilst reducing the risk of bracket distortion. Furthermore, the presence of the strengthening cavities allows the bracket to be formed from a non-surface hardened material. That said, it will be appreciated that hardening of the bracket material is not precluded by the present invention.

Advantageously the cavity is elongate. Desirably, the domed portion is part spherical in profile. Preferably said first and second limbs are integral with one another and conveniently the respective cavities of said first and said second limbs are continuous with each other. Preferably the aperture of each of said first and second limbs passes through the cavity of each of said first and second limbs. Advantageously the aperture of each of said first and second limbs is disposed at or adjacent that cavity edge furthest from the join, in use, between the first and second sections of picture frame.
Desirably the cavities are formed in such a way that the thickness of material of at least a part of each domed portion of the bracket is less than the thickness of material at those portions of the bracket not having any cavities. Preferably the thickness of the material at those portions of the bracket not having any cavities is between 0.075 inches i.e. 1.91 mm and 0.040 inches i.e. 1.02 mm, and more preferably the thickness of the material at those portions is either 1.91mm (0.075 inches), 1.50mm (0.059 inches) or 1.22mm (0.048 inches).

Typically, headless setscrews are used to lock the ends of the bracket in the frame sections. However, a problem inherent in use of headless setscrews has been cost. Historically, conventional headed screws have been generally much cheaper than setscrews. Furthermore, the short length setscrews typically used for picture framing applications are inherently more difficult to handle than headed screws, when manually assembling them to a jointing bracket, and so a manual assembly process using short length setscrews can prove to be expensive by comparison with using headed screws.

The Applicant has considered the use of conventional headed screws in place of setscrews, but immediately faces the difficulty that there is very little distance between the outer face of the bracket and the rear face of the picture frame, and there is therefore a serious risk that the head of a headed screw will protrude beyond the plane of the rear face of the picture frame giving an aesthetically displeasing appearance, and furthermore hindering the flush mounting of a picture frame against a wall or the like and risking marking the wall.

Preferably with the first aspect of the invention, each of the first and second limbs has a cavity therein comprising a countersink and each aperture of each of said first and second limbs passes through the respective countersink, which, in use, accommodates a head of the respective screw. This has the advantage that the head of the screw is hidden. In addition, the screw is less likely to protrude from the rear of the frame, thus minimising the risk of marking the surface upon which the frame is hung and minimising the risk of a protruding screw head preventing the frame from hanging correctly.

It will be appreciated that the term 'countersink' is used herein to embrace cavities having sides, which are bevelled (including arcuate) with respect to the cavity base in addition to those having sides, which are perpendicular with respect to the cavity base.

Advantageously the bracket includes, in association with each aperture, a respective headed screw. Desirably the diameter of each countersink is greater than the diameter of the head of the associated screw, and conveniently the depth of each countersink is such that substantially the whole of the thickness of the head of the associated screw can be accommodated within the countersink.

Preferably, where each of said cavities of the first and second limbs comprises a domed portion of bracket material, each of said first and second limbs is provided with an additional cavity comprising a countersink, through which the respective aperture of each of said first and second limbs passes. Advantageously, the countersunk aperture passes through the domed portion. This particular arrangement combines the advantages of a reduction in raw material consumption with bracket strengthening and concealment of the head of the screw.

Preferably each cavity is located in that face of the bracket, which is presented outwardly of the re-entrant channels in use. Preferably each cavity is created under a domed portion of bracket material or any other shaped formation of bracket material projecting inwardly of the re-entrant channel in use. These particular arrangements contribute to the strengthening of the bracket. Preferably said first and second limbs are integral with one another. Desirably, in use, said first and second limbs are disposed at right angles to each another. Preferably, a crease is provided between said first and second limbs to control the bias of the bracket, in use. Preferably, the crease is configured to assure a tight fitting front corner joint by forcing the front corners of the frame sections tightly together. This increases the integrity and strength of the front of the corner joint, in use. Preferably each limb is provided with one or more additional cavities, which may be countersinks, domed portions of bracket material, or a combination thereof. Preferably each limb is provided with one or more additional apertures for receiving respective screws. Conveniently each aperture is threaded to receive a thread of the respective screw. Alternatively each aperture is plain and each screw is a self-tapping screw. This construction has the advantage of a significant reduction in labour costs in the manufacture of such a bracket. Conveniently each aperture is formed with at least one radial extension, and may be formed with two diametrically opposite radial extensions. Desirably each cavity is formed by a pressing operation rather than by removing material from the bracket. Preferably the bracket is formed from steel. More preferably the bracket is formed from cold rolled, hot rolled, mild, hard, low carbon, high carbon or stainless steel. Moreover, the bracket may be formed from a steel alloy and may be work hardened during forming. Alternatively, the bracket is formed from synthetic or plastic materials, and is preferably formed by injection moulding.

In accordance with a second aspect of the invention there is provided a pressure plate comprising a first limb for insertion into a re-entrant channel of a first picture frame section, and a second limb for insertion into a re-entrant channel of a second picture frame section abutting the first picture frame section in use, wherein the pressure plate has a cavity therein.

Advantageously the cavity is defined by a domed portion of bracket material. This domed cavity confers the same advantages as mentioned in relation to the bracket. Desirably the domed portion is part spherical in profile. Preferably the domed portion comprises an elongate recess. Preferably the cavity is located in that face of the pressure plate, which is presented inwardly of the re-entrant channels in use. Advantageously, the cavity is located in the pressure plate such that, in use, a screw abuts the outer face of the cavity. This is advantageous, since the pressure exerted by the screw on the pressure plate is distributed over the dome and thus can help to prevent the pressure plate from deforming, which in turn helps to prevent the channels from deforming in use.

Desirably each of said first and second limbs has a cavity therein. Preferably each limb is provided with one or more additional cavities. Desirably the cavities are formed in such a way that the thickness of material of at least a part of each domed portion of the pressure plate is less than the thickness of material at those portions of the pressure plate not having any cavities. Desirably each cavity is formed by a pressing operation rather than by removing material from the pressure plate. Conveniently, in use, said first and second limbs are disposed at right angles to each another.

A further consequence of a reduction of bracket and pressure plate thickness is that the bracket and pressure plate assembly will no longer fit as snugly in the depth of the frame channel as bracket and pressure plate assemblies made from thicker materials. A less snug fit in the channel makes frame assembly more difficult and reduces user satisfaction with the bracket and pressure plate assemblies, as it becomes evident that thinner materials have been used for their manufacture.

In accordance with a third aspect of the invention there is provided a pressure plate comprising a first limb for insertion into a re-entrant channel of a first picture frame section, and a second limb for insertion into a re-entrant channel of a second picture frame section abutting the first picture frame section in use, wherein the pressure plate comprises a body and a cranked portion which is disposed adjacent the body.

The cranked nature of the pressure plate acts to stabilise the bracket and pressure plate assembly in the channel by, in effect, increasing the cross-sectional area of the bracket and pressure plate assembly without increasing the thickness of the materials used to make the bracket and pressure plate. Thus thinner materials may be used to manufacture the bracket and pressure plate whilst maintaining or improving the snug fit of the bracket and pressure plate assembly in the channel.

Preferably, the thickness of the material of the pressure plate is between 0.016 inches (i.e. 0.41mm) and 0.042 inches (i.e. 1.07mm), and more preferably, the thickness of the material is 0.028 inches (i.e. 0.71mm).

Preferably, each of the first and second picture frame sections has a front and a rear face and, in use, the cranked portion extends angularly from the body, towards the rear face of the first and second picture frame sections.

Preferably, the cranked portion is angled such that, in use, the pressure plate bears against the base of the re-entrant channel and the bracket fits snugly between the cranked portion and the flanges of the re-entrant channel.

Preferably the cranked portion is integral with the body portion. Advantageously the first and second limbs are disposed at right angles to each other, thereby creating an apex portion therebetween. Advantageously the cranked portion is defined at said apex portion. Preferably the cranked portion is stepped in profile, and desirably the plane of the tip of the apex portion is parallel to the plane of the body.

Preferably the pressure plate according to the third aspect of the invention is provided with the cavity of the second aspect of the invention.

It will be understood that in all the embodiments, the first and second limbs are preferably integral with one another. Preferably the pressure plate is formed from steel, and may be formed from hardened high carbon steel.

Preferably the bracket of the first aspect of the invention further comprises the pressure plate of either the second or the third aspects of the invention. Desirably, in use, at least a part of the cranked portion of the cranked pressure plate abuts a portion of the bracket.

As previously mentioned, pressure plates act to prevent damage to the frame channels when torque is applied to the screws during frame assembly. The use of thinner material for the manufacture of pressure plates suffers the adverse consequence that dents may be formed in the pressure plates as the screws tighten against the pressure plates during frame assembly. In addition, the bases of the frame channels may become dented as the thinner material of the pressure plate fails to protect the channels. Denting of the frame is not only aesthetically displeasing, but it may also impede the achievement of a tightly joined frame. In order to minimise damage to the pressure plate and/or to the channel caused by pressure transmitted from the screws during frame assembly, the Applicant has developed an improved fixing screw.

According to a fourth aspect of the invention there is provided a screw for fixing a bracket to a section of picture frame, the screw comprising a shank having a first end configured to receive screw driving means, and a second end which, in use, directly or indirectly abuts the picture frame, wherein said second end is substantially planar and extends perpendicularly from the shank such that the diameter of the second end is equal to or greater than approximately 0.160 inches (4.06mm).

It will be appreciated that this aspect of the invention provides an essentially wide flat-bottomed screw. The advantage of using such screws in the picture framing industry is that when the screw is screwed into the bracket during frame assembly, the pressure transmitted by the second end of the screw onto the frame (and exerted on the pressure plate if one is used in the bracket arrangement) is spread evenly across a relatively large surface area of the second end of the screw as compared to the pressure distribution achieved with conventional, chamfered screws. This is because conventional chamfering of the screw leads to a significant reduction in the diameter and therefore surface area of the second end. Increasing the diameter and therefore surface area of the second end minimises the risk of distortion of the pressure plate (if one is used in the bracket arrangement), and of the picture frame itself. It should be noted that this aspect of the invention does not preclude a chamfer towards the second end of the screw, as long as the required diameter is maintained. This ensures that the pressure is spread across a minimum surface area of the second end of the screw, thus further minimising the risk of distortion of the pressure plate/picture frame.

Preferably the second end of the screw has a diameter of less than or equal to approximately 0.250 inches (6.35mm). More preferably, the second end of the screw has a diameter of 0.180 inches (4.57mm).

Preferably, the second end of the screw is flat to within 0.005 inches (0.127mm). More preferably, the second end of the screw is flat to within 0.001 inches (0.025mm).

Preferably the screw is formed by way of a cold forming process. This has the advantage of consuming less material during screw manufacture than other conventional methods of manufacture such as screw machining.

Preferably the first end of the screw is headless, and desirably the screw is a setscrew. Alternatively the first end of the screw is headed.

In a further alternative embodiment, a central recess is provided in the second end of the screw. This can be of any convenient shape or form. The central recess is not only advantageous in reducing raw material consumption but also in reducing the overall weight of the screw. This is an important consideration because the cost of plating or finishing is usually charged by unit of weight rather than by unit of surface area. In addition, reducing the weight of the screws can result in a significant reduction in the shipping weight and therefore shipping costs. Similarly, reducing the weight of the other components of the invention, by a reduction in raw material consumption, also reduces the shipping weight and attendant shipping costs.

Preferably, the recess is circular. Conveniently, the recess may be conical or spherical. Alternatively, the recess may have parallel or angular sidewalls. Preferably, the recess has a diameter of between 0.150 inches (3.81mm) and 0.050 inches (1.27mm). Preferably, the second end of the screw forms a ring of width equal to or less than approximately 0.010 inches (0.25mm).

Preferably the screw is formed from steel.

Preferably the bracket of the first aspect of the invention further comprises the screw of the fourth aspect of the invention. Desirably the bracket of the first aspect of the invention further comprises the pressure plate of either the second or the third aspects of the invention and the screw of the fourth aspect of the invention.

According to a fifth aspect of the invention there is provided a hanging bracket assembly for mounting a picture frame, the hanging bracket assembly comprising a hanging means, and a body for insertion into a channel of a picture frame, said body having an aperture for receiving a screw, wherein said body also comprises a cavity through which said aperture passes.

Preferably, said cavity comprises a domed portion of bracket material. Preferably, said aperture is configured to receive a threaded screw. Alternatively, said aperture is configured to receive a self-tapping screw. Such a configuration may significantly reduce labour costs in the manufacturing of the hanging bracket. Conveniently said aperture is formed with at least one radial extension. Preferably, said body is formed from mild steel. Alternatively, said body is formed from high carbon steel, stainless steel or a steel alloy. Preferably, the material forming said body is work hardened. Preferably, said cavity comprises a countersink and said aperture passes through said countersink. Preferably, the hanging means comprises an aperture for mounting the hanging bracket assembly on a projecting nail or support lug. Alternatively, when two hanging bracket assemblies are employed as a pair, the apertures will be used to anchor the ends of an attached cord or wire, which is configured to engage a projecting nail or support lug.

The invention further resides in a picture frame or a kit of parts incorporating any combination the above-mentioned aspects of the invention.

In addition to the above, the parts defined in the above five aspects of the invention may be used in the assembly and/or hanging of signs and display boards. Furthermore, they may be used in the assembly and/or hanging of window and doorframes.

The invention will now be described, by way of example only, and with reference to the accompanying drawings, wherein:
Figure 1 is a diagrammatic perspective view of one corner of a rectangular picture frame;
Figure 2 is a sectional view on the line A-A of Figure 1;
Figure 3 is an inverted plan view of a corner of the rectangular picture frame utilising a conventional-type bracket, thinned down to save on raw material costs;
Figures 4 and 5 are inverted sectional views of a corner of a rectangular picture frame of similar, but not identical form to that of Figures 1 to 3, equivalent to a section taken along the line B-B of Figure 3, and utilising the thinned down conventional-type bracket of Figure 3 in combination with a conventional pressure plate and conventional screw, wherein Figure 5 demonstrates deformation of the bracket;
Figure 6A is a plan view of a bracket of the first aspect of the invention;
Figure 6B is a plan view of an alternative bracket according to the first aspect of the invention;
Figure 6C is a plan view of an alternative bracket according to the first aspect of the invention;
Figure 7 is a sectional view on the line C-C of Figure 6A;
Figure 8 is a plan view of a variant bracket of the first aspect of the invention;
Figure 9 is a sectional view on the line C'- C' of Figure 8;
Figure 10 is the same sectional view of the corner of the frame as Figures 4 and 5, utilising a bracket of the first aspect of the invention, which could be that of Figures 6A and 7 or Figure 6B or Figure 6C or Figures 8 and 9;
Figure 11 is sectional view of a further variant bracket of the first aspect of the invention, having a countersink therein;
Figure 12A is a fragmentary plan view of a further variant bracket of the first aspect of the invention, illustrating an alternative thread form;
Figure 12B is the same sectional view of the corner of the frame as Figures 4 and 5, utilising a the bracket of Figure 12A;
Figure 12C is a fragmentary plan view of a still further variant bracket of the first aspect of the invention, illustrating an alternative thread form;
Figure 13 is the same sectional view of the corner of the frame as Figures 4, 5 and 10 utilising a conventional bracket, conventional screw and a conventional-type pressure plate, thinned down to save on raw material costs, demonstrating deformation of the pressure plate;
Figure 14 is a plan view of a pressure plate of the second aspect of the invention;
Figure 15 is a sectional view on the line D-D of Figure 14;
Figure 16 is the same sectional view of the corner of the frame as Figures 4, 5, 10 and 13 utilising a conventional bracket, conventional screw and a pressure plate of the second aspect of the invention;
Figure 17 is a plan view of a pressure plate of the third aspect of the invention;
Figure 18A is a sectional view on the line E-E of Figure 17;
Figure 18B is a sectional view similar to that of Figure 18A, showing a pressure plate of the third aspect of the invention in juxtaposition with a bracket according to the first aspect of the invention, prior to insertion into a frame channel;
Figures 19 and 20 are the same sectional views of the corner of the frame as Figures 4, 5, 10,13 and 16 utilising a conventional bracket, conventional-type pressure plate, thinned down to save on raw material costs, and conventional screw, wherein Figure 20 demonstrates deformation of the pressure plate caused by pressure from the conventional screw;
Figures 21 and 22 are the same sectional views of the corner of the frame as Figures 4, 5, 10,13,16, 19 and 20 utilising a conventional bracket, conventional-type pressure plate, thinned down to save on raw material costs, and screw of the fourth aspect of the invention, wherein Figure 22 demonstrates that no deformation of the pressure plate has been caused by pressure from the screw of the invention.

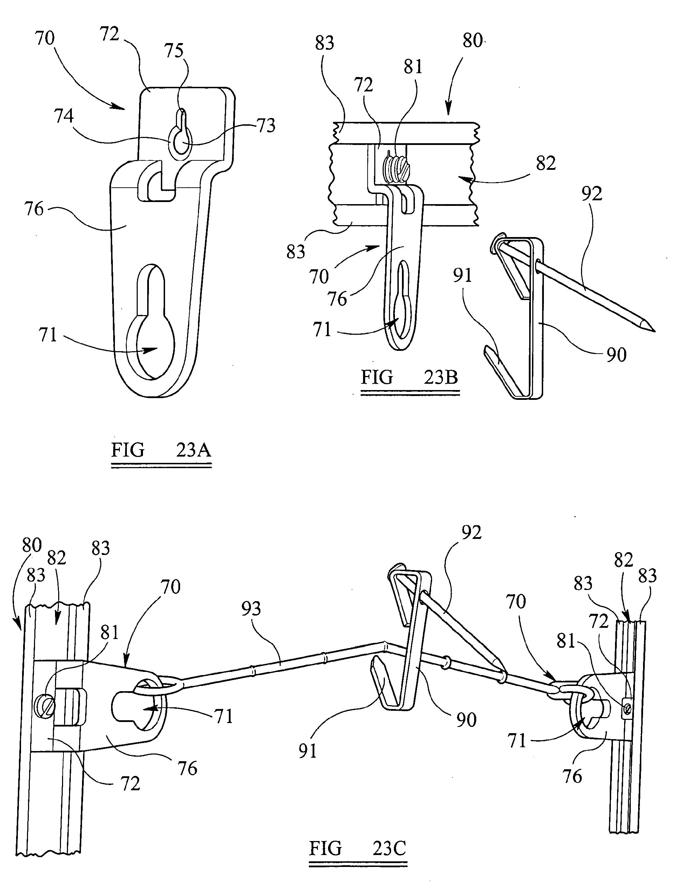

Figures 23A through 23C show construction and use of a hanging bracket assembly according to the fifth aspect of the invention. More specifically, Figure 23A shows a perspective view of a hanging bracket assembly according to the fifth aspect of the invention, Figure 23B shows a perspective view of the hanging bracket assembly of Figure 23A attached to the rear of a picture frame and juxtaposed with a wall hanger, and Figure 23C shows a perspective view of a pair of hanging bracket assemblies of Figure 23A, attached to the rear of a picture frame, with a connecting wire there between, which is juxtaposed with a wall hanger.

Figures 24A through 24C show construction and use of an alternative hanging bracket assembly according to the fifth aspect of the invention. More specifically, Figure 24A shows a perspective view of the body of a hanging bracket assembly according to the fifth aspect of the invention, Figure 24B shows a perspective view of a hanging bracket assembly according to the fifth aspect of the invention, with the body of Figure 24A juxtaposed with a hanging means and screw, and Figure 24C shows a perspective view of the hanging bracket assembly of Figure 24B, attached to the rear of a picture frame.

Figures 25A and 25B show perspective views of a bracket according to the first aspect of the present invention, similar to that shown in Figure 6B, with screws inserted through respective domed apertures from the domed side of the bracket.

Figures 26A and 26B show respectively plan views of two brackets accordingly to the first aspect of the present invention, similar to that shown in Figure 6B, but with the centre of the domed apertures being provided at different distances from the free ends of the bracket.

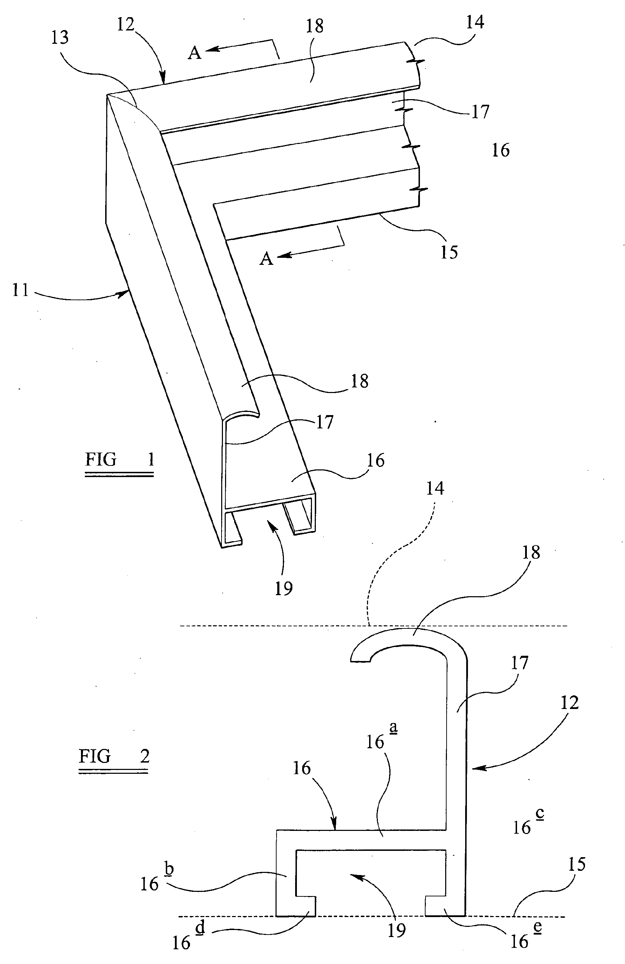

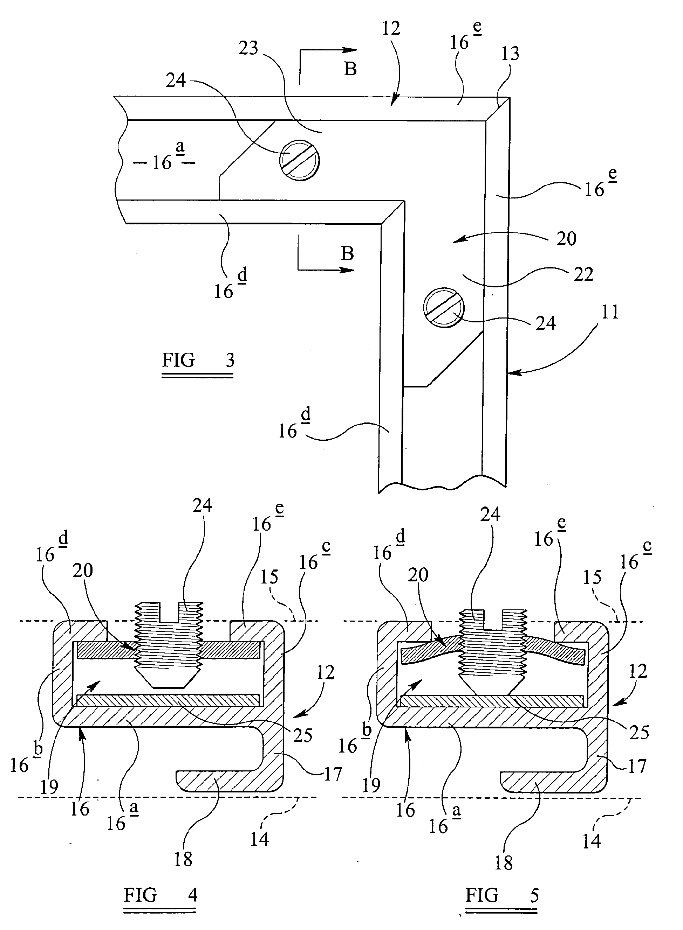

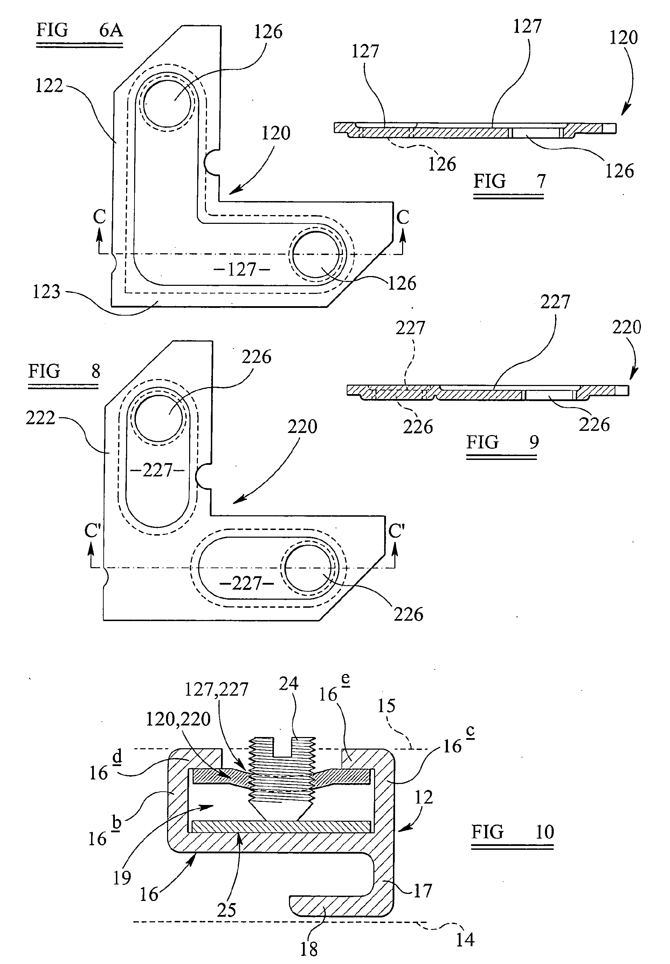

It will be apparent that the figures are not all drawn to the same scale. Furthermore, although the sectional views of the picture frames of Figures 1 to 3 do not have the same relative dimensions as those of Figures 4, 5, 10, 12B, 13, 16 and 19 to 22, the corresponding component parts for these figures will be numbered consistently throughout the description for ease of reference.

Referring to the drawings, Figures 1 to 5, 10, 12B, 13, 16 and 19 to 22 illustrate known picture frame sections formed by extrusion from aluminium or aluminium alloy. As best seen from Figure 1, the picture frame sections are elongate, and are of constant cross-section throughout their length. Where two picture frame sections are to be abutted at right-angles, for example when producing a rectangular frame, the abutting ends of the two sections 11, 12 are cut at a 45 degree mitre 13. The picture frame will have a face which can conventionally be referred to as a front face and which is indicated generally at 14, and an opposite face conventionally referred to as a rear face indicated generally at 15. In normal use of a picture frame the rear face will be placed against the wall upon which the picture frame is hung or otherwise mounted.

Each picture frame section includes a base region 16, a side wall 17 integral with the base region 16 and upstanding therefrom, and an in-turned lip 18 at the edge of the side wall 17 remote from the base region 16. The lip 18 extends inwardly above the base region 16. The base region of each picture frame section is of channel-shaped cross-section having a base wall 16a, opposite side walls 16b, 16c which are parallel, the side wall 16c being a rearward continuation of the upstanding side wall 17 of the frame section, and inwardly extending flanges 16d, 16e at the ends of the side walls 16b, 16c remote from the base wall 16a.

It will be recognised that by virtue of the flanges 16d, 16e extending towards one another and parallel to the base wall 16a but spaced therefrom, the base region 16 defines a re-entrant channel 19 opening onto the rear face 15 of the picture frame sections. Such picture frame sections are known, as are a wide variety of other picture frame sections also making use of re-entrant channel opening onto the rear face of the picture frame. Although the sections 11, 12 illustrated in the drawings are aluminium or aluminium alloy extrusions, picture frame sections embodying a re-entrant channel can be formed from other materials, and by other manufacturing techniques. For example plastics sections could be produced by extrusion or moulding, metal sections could be produced by extrusion, casting, machining, or roll forming, and wooden sections could be produced by machining.

Figures 3 to 5 illustrate a conventional right-angle corner jointing bracket 20 in position in the re-entrant channel 19 of sections 11, 12 of Figures 1 to 2. From Figure 3, it can be seen that the bracket 20 has first and second integral, coplanar limbs 22, 23 extending at right-angles to one another.
Such a bracket 20 may have biased limbs (not shown) for a more secure corner joint fitting. Each limb 22, 23 has parallel, longitudinally extending sides, and the width of each limb is slightly less than the width of the channel 19, between the side walls 16b, 16c and greater than the gap between the flanges 16d, 16e, of the picture frame sections. When creating a right-angled corner between two 45° mitred ends of the sections 11, 12 the limb 22 of the bracket 20 is slid into the channel 19 of the section 11, and the section 12 is then slid onto the limb 23 so that the limb 23 is received within the channel 19 of the section 12. The two sections are pushed towards one another until their mitred end faces abut, and thereafter the bracket 20 is locked to each section 11, 12 by tightening a respective locking screw 24 which passes through bores (not illustrated) associated with each of the limbs 22, 23 of the bracket 20. Tightening the screw 24 causes the bracket 20 to press firmly against the undersides of the flanges 16d, 16e thereby clamping the limbs 22, 23 of the bracket 20 to the abutting picture frame sections 11, 12 and creating a corner joint between the sections.

Figures 4 and 5 illustrate the final stages of frame assembly, wherein the screw 24 is tightened to lock the jointing bracket 20 in place. These figures demonstrate the problems associated with a reduction in the thickness of the material used to make conventional jointing brackets. Specifically, Figure 5 illustrates deformation of the jointing bracket 20 as screw 24 is tightened, as can occur if the material used to make the jointing bracket is not strong enough, for example is too thin. Other possible negative effects of such deformation are stripped screws and stripped aperture threads, either of which may make it difficult, or even impossible, to move the screw forwards or backwards through the jointing bracket. Also, jointing bracket deformation is likely to result in an overall weakened corner joint fixing.

Where the material of the picture frame sections is at risk of damage by engagement therewith of the end of the shank of the screws 24 then a steel, or other protective packing piece known as a pressure plate can be introduced between the base of the channel 19 and the free end of the shanks of the screws 24 to accept the loading imposed by the screws 24. For completeness, it will be mentioned that Figures 4, 5 and 10 feature a conventional pressure plate 25 in the form of a single packing piece, of similar shape to the bracket 20 but not usually of the same thickness as bracket 20. The relevance of pressure plates will be discussed later.

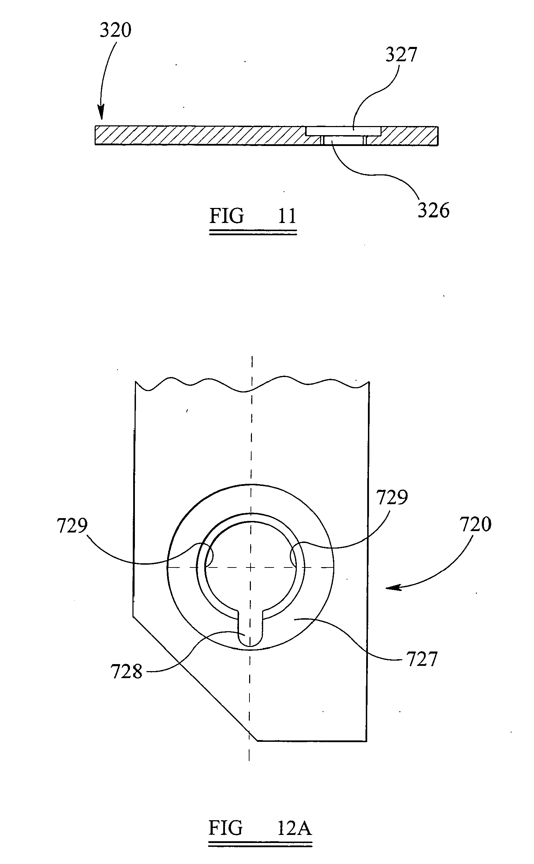

A first embodiment 120 of the bracket of the first aspect of the invention can be seen from Figures 6A and 7. This bracket 120 is substantially of the same shape as that of conventional bracket 20 of Figure 3, having first and second integral, coplanar limbs 122, 123 extending at right-angles to one another. As with conventional bracket 20 (although not illustrated therein), each of the limbs 122, 123 of bracket 120 has an aperture or bore 126 towards its free end for receiving the screw 24. Importantly, bracket 120 differs from conventional bracket 20 in that it has an elongate domed cavity in the form of a recess 127 extending continuously from limb 122 to limb 123. Bores 126 are located towards the short edges of the recess 127. As can be seen best from Figure 7, the recess 127 extends out of the plane of the bracket.

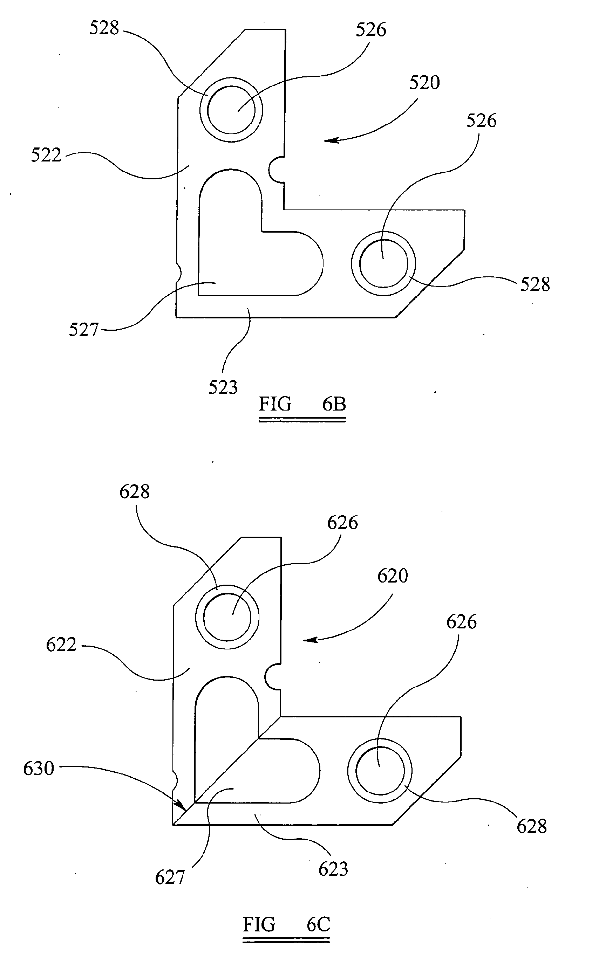

Figures 6B and 6C illustrate alternative embodiments 520 and 620 of brackets according to the first aspect of the invention. Both of these brackets 520 and 620 are of similar shape to that of Figure 6A. Each bracket 520 and 620 comprises limbs 522, 523 and 622, 623, respectively, with bores or apertures 526 and 626, respectively, in each limb. As illustrated, each bracket 520 and 620 also comprises a domed cavity portion in the form of a recess 527, 627 extending continuously from limb 522, 622 to limb 523, 623. However, unlike in bracket 120, the bores 526 and 626 do not extend through the respective cavities 527 and 627. In the embodiments shown, the bores 526 and 626 are themselves formed in separate cavities or countersinks 528 and 628, respectively. Bracket 620 also comprises a crease line 630 between limbs 622 and 623 to control the bias of the bracket 620, in use. The crease line 630, in this example, is configured to assure a tight fitting front corner joint by forcing the front corners of the frame sections 11, 12 tightly together. This increases the integrity and strength of the front of the corner joint, in use.

Figures 8 and 9 illustrate a further embodiment 220 of the bracket of the first aspect of the invention. Again, this is of a similar shape to the conventional bracket 20 of Figure 3, having limbs 222, 223 and bores 226. However, the cavity of this embodiment of the first aspect of the invention is in the form of two discrete recesses 227 located in limbs 222, 223. Within each recess, a bore 226 is located towards that short edge of the recess 227 which is disposed towards the free end of the limb 222 or 223. As can be seen best from Figure 9, each of the recesses 227 extends out of the plane of the bracket 220.

Figure 10 applies equally to illustrate any of the above-described embodiments of the bracket of the first aspect of the invention locked in place within the re-entrant channel 19 of the picture frame sections 11, 12. As can be seen from this Figure, the cavity 127, 227 is located in that face of the bracket 120, 220 which is presented outwardly of the re-entrant channel 19, i.e. towards the rear face 15 of the picture frame.

The domed nature of the cavity in the bracket embodiments illustrated in Figures 6A to 9 acts to strengthen the bracket, thus allowing the bracket to be formed from a thinner material than comparable conventional brackets such as that illustrated in Figure 3, without the need for surface hardening of the material. Although some particular embodiments of brackets of the first aspect of the invention have been illustrated herein, it will be appreciated that many different shapes, sizes and numbers of cavities may be incorporated into the bracket according to the invention. The bores 126, 226 may be located at alternative positions to that illustrated in Figures 6A and 8, and may in be located outside of the cavities 527 and 627, as shown in Figures 6B and 6C. In a preferred embodiment (not shown), the cavities are formed in such a way that the thickness of material at the domed portions is less than that at the planar regions of the bracket, for example by a pressing manufacturing process. A preferred bracket thickness (in those planar bracket portions not having any cavities therein) is between 0.075 inches (1.91mm) and 0.040 inches (1.02mm).

Figures 11 and 12A through 12C illustrate third, fourth and fifth embodiments 320, 720 and 420 respectively of the bracket of the first aspect of the invention. Again, these brackets 320, 720 and 420 are of a similar shape to conventional bracket 20. However, as can be seen from Figure 11, in this embodiment the cavity is in the form of a countersink 327 instead of a dome, with the respective bores 326 extending through the thickness of each limb at the base of each countersink 327. This results in a bracket 320 having parallel planar upper and lower faces. Such a bracket 320 may be formed by stamping the bracket blank from planar steel strip and then forming an aperture through the strip by, for example, a punching operation, at the intended location of each bore. Next each blank is subjected to a coining operation to size the aperture to the required bore diameter and at the same time to displace metal within the blank to form a respective countersink in the upper face of the blank around each aperture.

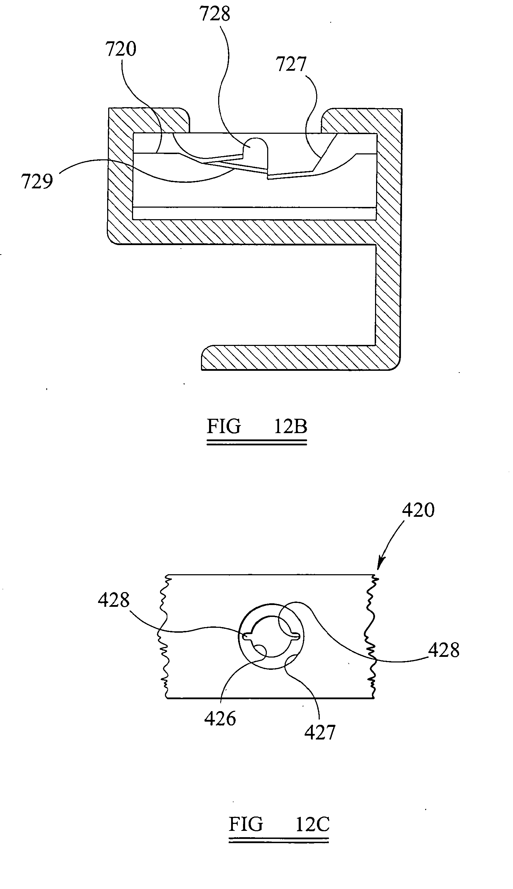

Figures 12A and 12B show a variant bracket 720 according to the first aspect of the invention, whereby the cavity is in the form of a dome 727 through which an aperture 726 passes. As best illustrated in Figure 12B, the aperture 726 has a radial extension 728 and a profiled edge 729 such that if the edge 729 is formed from thin enough material, it may engage in the thread of an appropriate screw. An alternative bracket 420 is shown in Figure 12C with a similarly domed cavity 427 with aperture 426 therethrough. However, in this embodiment the aperture 426 has two diametrically opposed radial extensions 428.

As with the brackets of Figures 6A through 10, the inclusion of a cavity, i.e. a hollow, in brackets 320, 720 and 420 has the effect of reducing the amount of raw material required to manufacture the bracket. In addition, the cavities 327, 727 and 427 serve to hide the head of the locking screw (not illustrated) which passes through the bores 326, 726 and 426, respectively. As previously mentioned, this enables historically cheaper, easier to handle headed screws to be used in place of the conventionally used headless setscrews 24 of Figures 4, 5 and 10, without the drawbacks of wall marring and/or prevention of a flush wall mounting, as normally encountered when using headed screws. Suitable locking screws for use with the brackets of Figures 11 through 12C are conventional pan-head screws. Each headed locking screw has a screw threaded shank extending through the respective bore 326, 726, 426 in screw threaded engagement therewith. The bore can be tapped to provide therein a screw thread as a final stage in the manufacturing process of the bracket. However, as an alternative the headed screw could be a self-tapping screw which cuts its own thread in the wall of the bore as it is introduced therethrough. It will be recognised that rotating the screws to drive them through the bracket, irrespective of whether or not the screws are self-tapping, or the bores are previously tapped and threaded, causes the free end of the screw to engage the inner face of the base of the channel 19 and correspondingly the outer face of the bracket to seat beneath the flanges 16d, 16e of each picture frame section.

In the brackets 320, 720 and 420 of Figures 11 through 12C, concealment of the head of the screw is achieved by the fact that the diameter of each of the cavities 327, 727 and 427 is sufficient to accommodate therein the diameter of the head of the respective locking screw. Moreover, the depth of each cavity 327, 727 and 427 is such that substantially the whole of the thickness of the head of the respective screw can be accommodated. It will be understood that while it is desirable for the whole of the thickness of the screw head to be received beneath the outer face of the bracket 320, 720, 420, it is not essential since the thickness of the flanges 16d, 16e could accommodate a slight protrusion of the head of the screws above the level of the outer face of the bracket. Furthermore, it will be understood that the length of the shank of each screw is selected in relation to the thickness of the material at the base of the cavity 327, 727, 427 and the depth of the channel 19, so that the free end of the shank bears against the base of the channel 19, the bracket 320, 720, 420 bears against the underside of the flanges 16d, 16e, and there is still a slight clearance between the underside of the head of the screw and the face of the cavity. In this way it is possible to ensure that the head of the screw is received as deeply as possible within the cavity 327, 727, 427 without the head actually engaging the base of the cavity and preventing sufficient tightening of the bracket against the flanges 16d, 16e to lock the bracket in place. Naturally the length of the shank of the screws will be chosen to accommodate the thickness of a pressure plate if one is used.

It has been found to be advantageous to utilise in association with the planar brackets, headed or headless screws whose threads have been hardened to engage preformed threads in the bores 326, 426. However it would be possible to omit the threading of the bores and to utilize self-tapping screws for locking the brackets in use. It is to be understood that while it is convenient to use pan-head screws as the locking screws for use with the countersunk bores, screws with other head shapes are possible, and if necessary the shape of the recesses defining the countersinks in the bracket will be selected accordingly. Moreover the shape of the tool receiving formation in the screw head can be selected from a known range including slot, square drive, and cross head (Phillips or the like) and if desired these can be combined so that a single screw type can be driven by a variety of different tools.

Figures 12A through C illustrate an alternative thread formation that can be used in any of the bracket embodiments disclosed above. As shown in Figures 12A and 12B the wall of the aperture 726 at the base of the respective cavity 727 is formed with at least one radial extension 728 (and possibly two diametrically opposite extensions 428 as shown in Figure 12C). The material at the periphery of the bore is deformed, conveniently by a pressing or stamping operation, out of the plane of the limb of the bracket to define a helical formation to cooperate in the manner of a coarse pitch screw thread with a corresponding thread on the shank of a headed screw. Such treatment of the material of the bracket at the periphery of the bore produces a fastening which is sometimes known as a "TINNERMAN" fastening and it may be possible to produce the aperture, the cavity and the "TINNERMAN" formation in a single pressing or stamping and coining operation.

In alternative bracket embodiments (shown in Figures 6B and 6C) of the first aspect of the invention, the strengthening cavity and the countersink cavity are combined. Specifically, the bracket of the first aspect of the invention is provided with one or more hollowed cavities 527, 627 in order to strengthen the bracket, in addition to having one or more countersunk bores 528, 628 in order to hide the screw head(s). The countersunk bores may be disposed within or outside of the hollowed cavities. As with the bracket embodiments having a domed cavity, the cavities 327, 727 and 427 are located in that face of the bracket 320, 720, 420 which is presented outwardly of the re-entrant channel 19, i.e. towards the rear face 15 of the picture frame. Conveniently, each hollowed cavity may be formed by material displaced out of the plane of the bracket when the cavity is pressed into the material of the bracket. The bores 526, 626 can be formed at the same time, or can be formed subsequently by a drilling operation.

In a further modification (not illustrated) to the bracket of the first aspect of the invention, the bracket is a cast bracket and includes a mid-region which is exposed at the junction of the two frame sections being joined. The mid-region can be shaped to be part of the exterior of the assembled frame and could for example be a metal cube having the limbs extending from adjacent faces thereof to join two frame sections each of which has a plain right angle and face which abuts the respective face of the cuboidal mid-region of the bracket (rather than being a mitred end face) intended to abut the corresponding mitred end face of the adjoining section as shown in Figure 1.

All of the above-mentioned embodiments of the bracket of the first aspect of the invention are conveniently formed by a stamping/pressing operation from mild steel strip and may be galvanised or surface treated in some other way to minimise the risk of corrosion in use. The cavity is conveniently formed by the pressing/stamping operation which produces the bracket from the blank material. The bracket material may also be subject to surface hardening. It is to be understood however that a material from which the bracket is made is not of critical importance to the invention and the bracket may be formed as a casting rather than a stamping or pressing. The bores of the brackets of the first embodiment may be threaded to receive the thread of the respective screw, or may instead be plain for use with a self-tapping screw. Although the brackets herein described and illustrated have a cavity in each limb, it will be appreciated that a cavity in only one of the limbs is envisaged by the present invention. Furthermore, it will be appreciated that a cavity may be provided in one or both faces of one or more bracket limbs.

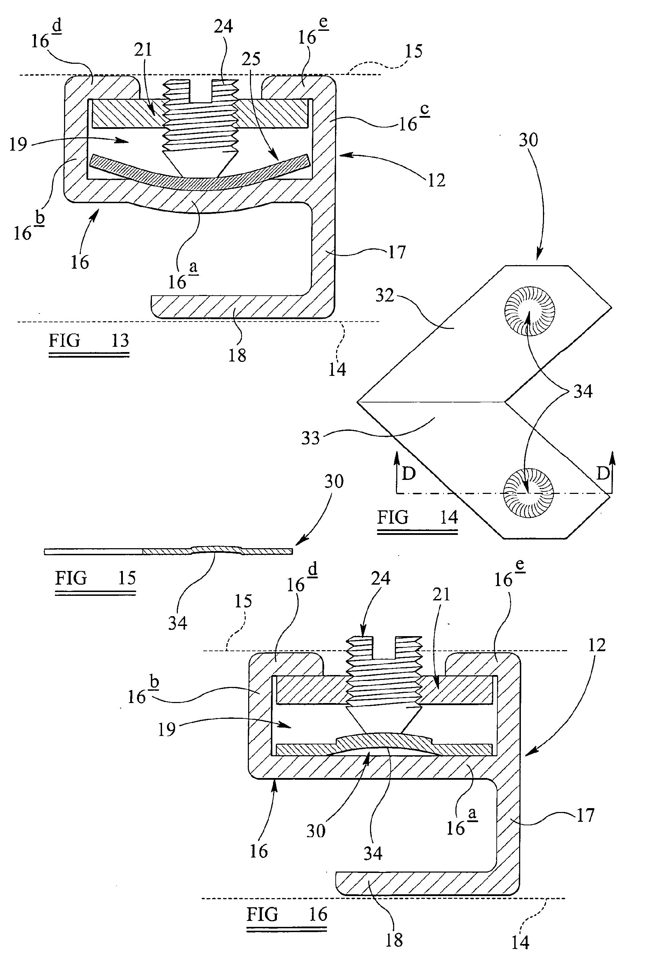

Figures 13 to 16 relate to the second aspect of the invention, namely to a pressure plate. Figure 13 illustrates a conventional pressure plate 25 (incidentally, as do Figures 4, 5 and 10) in position in a re-entrant channel 19 of a picture frame in conjunction with a conventional bracket 20 and screw 24. This Figure demonstrates the problem of deformation of the pressure plate and the channel base 16a at the point where the screw abuts the pressure plate. This can occur if the pressure plate is not strong enough to resist the torque applied to the screw 24 during frame assembly, for example if the pressure plate is not formed from thick enough material.

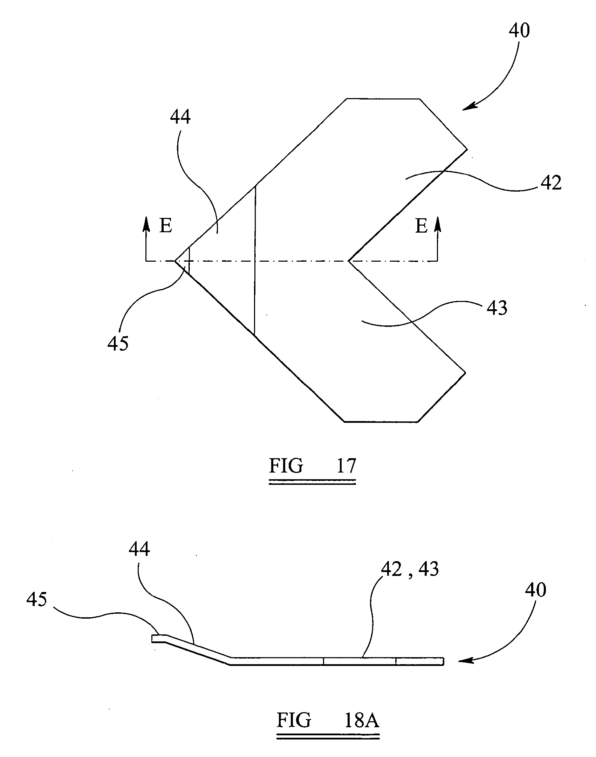

A pressure plate 30 of the second aspect of the invention is illustrated in Figures 14 to 16. As can be seen from these figures, the pressure plate 30 is of a similar shape to the brackets and conventional pressure plate described and illustrated herein, having first and second integral, coplanar limbs 32, 33 extending at right-angles to one another. In use, the pressure plate lies on the base 16a of channel 19 and is abutted by screw 24. Pressure plate 30 has no bores therethrough, and is fixed in place in the re-entrant channel 19 by pressure from the screw 24 sandwiching the pressure plate 30 between the screw and the channel base 16a. Importantly, the pressure plate 30 of the second aspect of the invention differs from conventional pressure plate 25 in that each limb 32, 33 has a domed cavity 34 therein. As can be seen from Figures 14 to 16, the domed cavity is part spherical in profile. However, it will be appreciated that it need not be so shaped, and many other hollowed out shapes, for example elongate recesses are envisaged by the second aspect of the invention. Similarly, although each limb has one cavity therein, alternative cavity numbers and arrangements are envisaged by this aspect of the invention. As can be seen from Figure 16, the cavity is located in that face of the pressure plate which is presented inwardly of the re-entrant channel 19, i.e. towards the front face 14 of the frame. However, it will be appreciated that a cavity may be provided in one or both faces of one or both limbs.

The domed nature of the cavities 34 of the embodiments shown in Figures 14 to 16 acts to strengthen the pressure plate 30, thus allowing it to be manufactured from thinner material than conventional pressure plates without the need for hardening of the material.

As with the domed cavities of the brackets of Figures 6 to 10, in a preferred embodiment (not shown), the cavities are formed in such a way that the thickness of material at the domed portions is less than that at the planar regions of the pressure plate. This may be achieved, for example, by a pressing manufacturing process. This is particularly advantageous, in that the amount of raw material required to manufacture the pressure plate is further reduced.

As can be seen from Figure 16, the domed cavity 34 is located such that the screw 24 abuts the centre of the cavity in use.

A pressure plate 40 in accordance with the third aspect of the invention is illustrated in Figures 17 through 18B. As can be seen from these figures, the pressure plate 40 is of similar shape to the brackets and pressure plates hereinbefore described and illustrated, having first and second integral, coplanar limbs 42, 43 extending at right-angles to one another. As can be seen best from Figure 17, the pressure plate 40 comprises a body portion defined by limbs 42, 43, and an integral apex portion 44 disposed at the outer edge of the pressure plate, where limbs 42, 43 meet.

Importantly, the pressure plate 40 of the third aspect of the invention differs from conventional-type pressure plate 25 thinned to save on raw material costs, in that the apex 44 is cranked, i.e. is displaced angularly from the body defined by limbs 42, 43. The cranked nature of the apex 44, can be best seen from the sectional view of Figure 18A. As can be seen, the apex is stepped in profile, with the outermost tip 45 of the apex being parallel to the body portion of the pressure plate defined by limbs 42, 43.

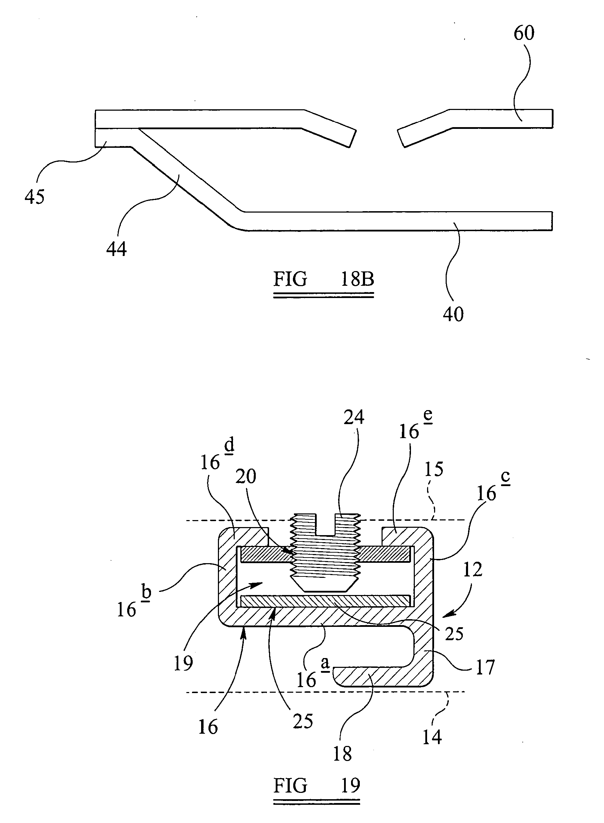

In use, the pressure plate 40 lies on the base 16a of channel 19 and is abutted by screw 24, as shown with conventional pressure plate 25 in Figures 4, 5, 10 and 13. Pressure plate 40 has no bores therethrough, and is fixed in place in the re-entrant channel 19 by pressure from the screw 24, in effect sandwiching the pressure plate 40 between the screw and the channel base 16a. The cranked portion of the pressure plate 40 extends angularly from the body of the pressure plate defined by limbs 42, 43, towards the rear face 15 of the frame. The apex tip 44 abuts against the bracket, providing stability of the pressure plate 40 within the re-entrant channel 19 and also provides for easier alignment and insertion of the pressure plate 40 and bracket 60, according to the present invention, into the re-entrant channel, as shown in Figure 18B.

Although a pressure plate 40 having a cranked apex has been illustrated and described herein, it will be appreciated that the number and shape of cranked portions on each pressure plate may be varied within the scope of the third aspect of the invention.

As previously mentioned, the cranked nature of the pressure plate 40 acts to stabilise the bracket and pressure plate assembly in the re-entrant channel 19. This allows thinner materials to be used to manufacture the bracket and pressure plate, without compromising on the snugness of fit of the bracket and pressure plate assembly in the depth of channel 19.

It will be appreciated that the cranked pressure plate 40 of the third aspect of the invention may be used with both conventional brackets 20, and with brackets of the first aspect of the invention. It can be seen that the cranked pressure plate would be particularly advantageous when used in conjunction with those embodiments of the bracket of the first aspect of the invention having strengthening cavities, thus allowing the bracket to be formed from a thinner material without leading to a less snug fit of the bracket and pressure plate assembly in the re-entrant channel 19.

In addition, it is envisaged that the cranked nature of the pressure plate 40 of the third aspect of the invention may be combined with the strengthening cavity of the second aspect of the invention to provide a pressure plate having both a cranked portion and a strengthening cavity. This would be particularly advantageous, since a thinner material could be used to manufacture the pressure plate 40 because the strengthening cavities 34 would prevent deformation of the pressure plate 40 and channel base 16a, whilst the cranked apex and tip 44, 45 of the pressure plate 40 would act to maintain a snug fit of the pressure plate within the re-entrant channel 19.

The pressure plates of the second and third aspects of the invention are conveniently formed by a stamping/pressing operation from mild steel strip and may be galvanised or surface treated in some other way to minimise the risk of corrosion in use. Surface hardening of the pressure plate material may also be performed. It is to be understood however that a material from which the pressure plate is made is not of critical importance to the invention and the pressure plate may be formed as a casting rather than a stamping or pressing.

Whilst the Applicant has been searching for ways to reduce consumption of raw materials for component parts by using thinner materials, particularly for pressure plates and brackets, it became apparent that the pressure exerted by the end of the screw shank onto the base 16a of re-entrant channel (and onto the pressure plate if one is used) during frame assembly was an important factor in determining whether deformation of the channel base 16a or pressure plate would occur.

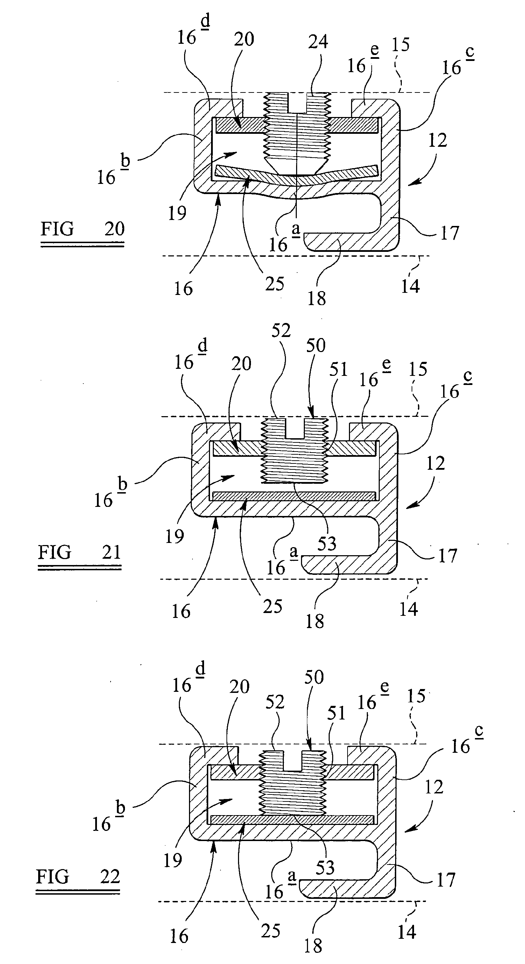

Figures 4, 5, 10, 13, 16, 19 and 20 show conventional screws 24 in use. As can be seen from these figures, the screws 24 are typically chamfered towards the end of the screw shank. Figures 19 and 20 illustrate the final stages of frame assembly wherein the conventional screw 24 is tightened to lock a bracket 20 in place. Figures 19 and 20 demonstrate the problems associated with a reduction in the thickness of the material used to make a conventional pressure plate 25, which acts to prevent damage to the base of the frame 16a when torque is applied to the screw during frame assembly. Specifically, Figure 20 illustrates deformation of the pressure plate 25 and channel base 16a as screw 24 is tightened, as can occur if the material used to make the pressure plate is not strong enough, for example if the material used to make the pressure plate 25 is too thin.

A screw 50 of the fourth aspect of the invention is illustrated in Figures 21 and 22. As can be seen from these figures, the screw 50 comprises a threaded shank 51 having a first end 52 configured to receive screw driving means, and a second end 53 which, in the embodiment shown in Figures 21 and 22, abuts the pressure plate 25 when the screw is tightened during frame assembly. Importantly, the chamfering of the second end of the screw shank is minimal in the screw of the fourth aspect of the invention, and end 53 of the screw extends perpendicularly from the shank 51 to provide an essentially wide flat-bottomed screw 50, with the threads on the shank extending to said flat bottom. The flat-bottom of end 53 is advantageous, in that when the screw is screwed into the bracket during frame assembly, the pressure transmitted by the end 53 of the screw onto the channel base 16a (and exerted on the pressure plate 25 if one is used in the bracket arrangement) is spread evenly across a relatively large surface area of the second end of the screw as compared to the pressure distribution achieved with conventional, chamfered screws 24. This enhanced pressure distribution minimises the risk of distortion of the pressure plate 25 (if one is used in the bracket arrangement), and of the channel base 16a itself.

The Applicant has found that the diameter of screw end 53 is an important factor in determining whether distortion of the pressure plate/channel base occurs. Specifically, the Applicant has found that a minimum diameter of 0.160 inches (4.06mm) for the screw end 53 is desirable, and that a diameter of 0.180 inches (4.57mm) is most convenient. It will be appreciated that the maximum diameter of the screw end 53 is defined by the diameter of the bracket bore 126.

It will be appreciated that although the screw 50 of the fourth aspect of the invention as illustrated and described herein is a headless, set screw, the screw of the fourth aspect of the invention may instead be headed. Furthermore, it will be appreciated that the screw 50 may be used to lock a bracket in place without a pressure plate being used, in which case the second end 53 of the screw will directly abut the base 16a of the channel. However, it will be appreciated that in either case, the second end of the screw 53 either directly or indirectly abuts the base 16a of the channel.

The screw may conveniently be formed by way of a cold forming process. This has the advantage of consuming less material during screw manufacture than other conventional methods of manufacture such as screw machining. The screw may have a recess, preferably a central recess, of any suitable shape or form.

Preferably the screw is formed from steel and more preferably the screw is formed from soft low carbon steel.

A hanging bracket assembly 70, according to the fifth aspect of the invention, is shown in Figures 23A through 23C, comprising a body 72 and a depending hanging means in the form of a hooked plate 76 with a keyhole aperture 71. The body 72 has an aperture 73 for receiving a screw 81, in use. The body 72 also comprises a cavity 74 through which the aperture 73 passes. In this embodiment, the cavity 74 is formed from a domed portion of bracket material and a radial extension 75 is provided in the aperture 73. This form of cavity 74 and aperture 73 can be called a "TINNERMAN" fastening, whereby, a screw 81 may be screwed onto the thin strip of material defining the edge of the aperture 73. Thus, it is not necessary to provide a screw thread around the aperture 73, for engagement with the screw 81.

Consequently, the costs of manufacturing the hanging bracket assembly 70 are less than for a traditional hanging bracket assembly (not shown), which would require a threaded aperture.

In use, the body 72 of the hanging bracket assembly 70 is inserted into a channel 82 of a picture frame 80 such that when a screw 81 is threaded into the aperture 73 and tightened, the base of the screw 81 abuts the bottom of the channel 82 and forces the top surface of the body 72 against the underside of the channel flanges 83, thus, locking the hanging bracket assembly 70 in position.

As illustrated in Figure 23B, the picture frame 80 can be mounted on a wall by engaging the hook 91 of a wall hanger 90 in the keyhole aperture 71. The wall hanger 90 being attached to the wall by means of a nail 92.

Alternatively, as shown in Figure 23C, a pair of opposed hanging bracket assemblies 70 may be employed with a connecting wire 93 strung between the bracket assemblies 70 via the keyhole apertures 71. As illustrated, the picture frame 80 may then be hung by engaging the wire 93 over the hook 91 of the wall hanger 90.

In the above embodiment, a headless flat-bottomed screw 81, according to the fourth aspect of the invention, is illustrated, however, any suitably sized screw may be used with the hanging bracket assembly 70.

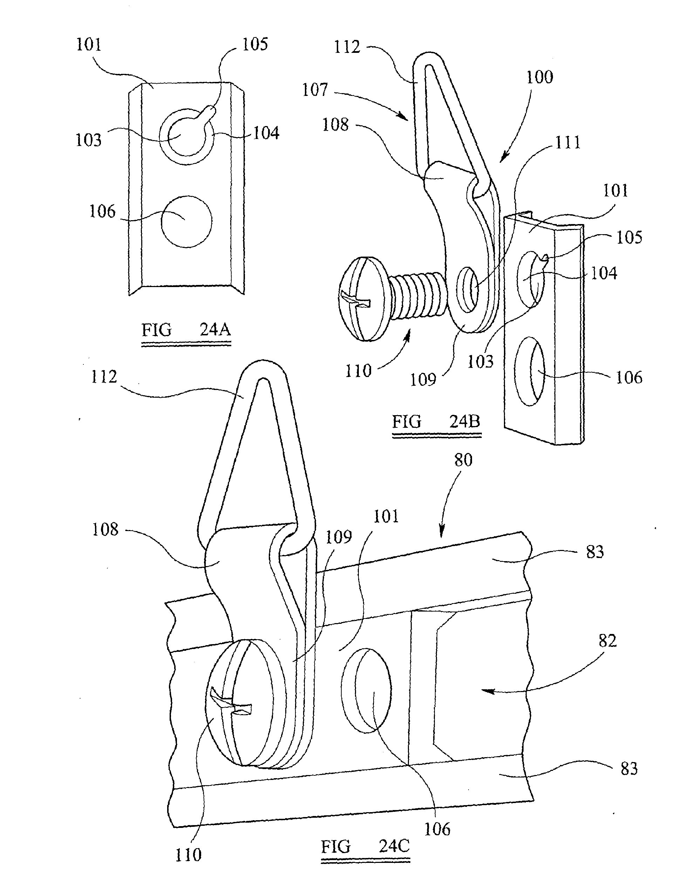

An alternative hanging bracket assembly 100 is shown in Figures 24A through 24C. In this embodiment, a body 101 is provided with an aperture 103 for receiving a screw 110, in use. The body 101 also comprises a cavity 104 through which the aperture 103 passes. As with the embodiment of Figures 23A through 23C, the cavity 103 is formed from a domed portion of bracket material and a radial extension 105 is provided in the aperture 103 to form a "TINNERMAN" fastening. The hanging means in this embodiment is in the form of an attachable element 107 with a sleeve portion 108 connected to a panel 109 with aperture 111. One side of a triangular ring 112 is fed through the sleeve portion 108. The attachable element 107 is attached to the body 101 by a headed screw 110, which is passed through the aperture 111 in element 107 before being screwed through aperture 103 in body 101, to fix the hanging bracket assembly 100 on the frame 80. As with the previous embodiment, the body 101 is brought into engagement with the channel flanges 83 as the screw 110 is tightened, thus, locking the bracket assembly 100 in place.

As can be seen in Figure 24C, the hanging bracket assembly 100, when fitted to a frame 80, may be mounted on a wall by engaging the aperture of the ring 112 on a projecting nail or support lug (not shown). Alternatively, as with the previous embodiment, two opposed hanging bracket assemblies 100 may be employed with a connecting wire (not shown) strung between the bracket assemblies 100 via the rings 112. The picture frame 80 may then be mounted by engaging the wire on a projecting nail or support lug (not shown).

As can be seen in this embodiment, the body 101 also comprises a second aperture 106. This may be used for direct mounting of the frame 80 onto a projecting nail or support lug (not shown), without the need for the attachable element 107.

Either of the embodiments of the fifth aspect of the invention, shown in Figures 23A through 24C, may comprise a cavity, in the body of the hanging bracket assembly, in the form of a countersink. Thus, a headed screw may be used to attach the hanging bracket assembly to the frame, whilst maintaining a flush outer finish.

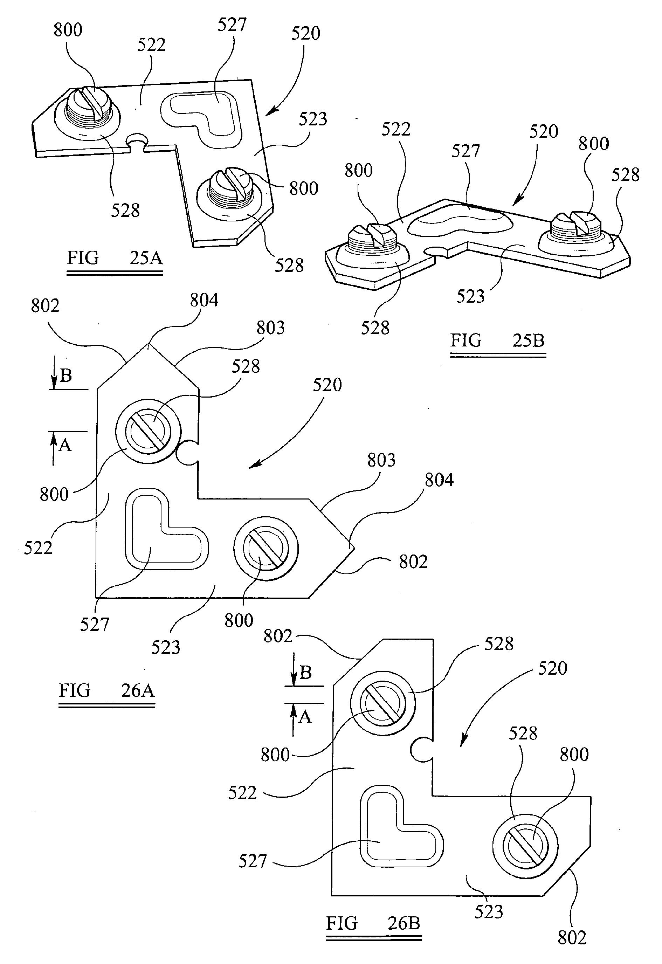

Figures 25A and 25B show a bracket according to the first aspect of the present invention which is similar to that shown in Figure 6B and so like reference numerals will be used. The bracket 520 is shown in Figures 25A and 25B from the opposite side to that shown in Figure 6B. Thus, the central domed cavity 527 and the two domed cavities 528 containing bores (not shown) extend upwardly. Slotted headed screws 800 are provided through each respective bore from the domed side of the bracket 520 such that their respective heads extend from the domes 528. Thus, in this arrangement it is intended that, in use, the cavities 527, 528 are located in the face of the bracket 520 that is presented inwardly of the re-entrant channel 19 (i.e. towards the front face 14) of the picture frame. This is contrary to the arrangement shown in Figure 10 where the cavities are located in the face of the bracket that is presented outwardly of the re-entrant channel 19.

The arrangement shown in Figures 25A and 25B may be useful in a situation where because of the cutting of the frame sections and/or the construction of the frame section's entrant channels, it is desirable to counter the induced angle bias in the bracket, and so the bracket may be reversed and screws inserted into the domed cavities as shown. In such a case it has been found that most of the structural strength of the bracket due to the domes, is maintained.

Figures 26A and 26B illustrate further brackets according to the first aspect of the present invention which are similar to that shown in Figure 6B and so like reference numerals will again be used. The main difference between the brackets 520 of Figures 26A and 26B is that of the position of the centre of the domed cavities 528 relative to the free ends of the bracket 520. Note, in each of the brackets 520 illustrated, the free ends include a linear taper 802 from the centre of the free end in a direction towards the outer side of the bracket 520, when in use. In addition, the bracket 520 shown in Figure 26A includes linear tapers 803 from the centre of the free ends in a direction towards the inner side of the bracket 520, when in use, thus forming two pointed free ends 804. A distance AB is illustrated on each of Figures 26A and 26B between a point on the outer side of the bracket 520 indicating the centre line of the respective domed cavities 528 and a point where the outer side of the bracket 520 meets the taper 802. The Applicants have found that the rigidity of the domed cavities 528 is significantly enhanced as the distance AB is increased. As an example only, the distance AB illustrated in Figure 26B is approximately 1.82mm and this bracket 520 has been found to be sufficiently rigid for most applications. However, the distance AB illustrated in Figure 26A is approximately 5.3mm and this bracket 520 has been found to be significantly more rigid. Accordingly, in certain embodiments of the first aspect of the present invention it is preferable that the distance AB be at least 5.3mm.

It will be appreciated that the invention resides in any combination of the above-mentioned aspects of the invention, either in use in a picture frame, or as a kit of parts. For example, the bracket of the first aspect of the invention may be provided as a kit of parts with, or used with the screw of the fourth aspect of the invention. The bracket of the first aspect of the invention may be provided as a kit of parts with, or used with the pressure plate of either the second or the third aspects of the invention and the screw of the fourth aspect of the invention. In addition, the hanging bracket assembly of the fifth aspect of the invention may be provided as a kit of parts with, or used with the screw of the fourth aspect of the invention.

It will be appreciated that the invention further resides in a picture frame incorporating any combination the above-mentioned aspects of the invention.

In addition, any aspect or combination of aspects of the present invention may be used in the assembly of signs, display boards, windows and doors.

## Claims

1. A bracket for joining a first and a second section of picture frame, said bracket comprising a first limb for insertion into a re-entrant channel of the first picture frame section, and a second limb for insertion into a re-entrant channel of the second picture frame section abutting the first picture frame section in use, wherein at least one of said first and second limbs has a cavity therein, and wherein each of said first and second limbs has an aperture therethrough for receiving a threaded screw.

2. A screw for fixing a bracket to a section of picture frame, said screw comprising a shank having a first end configured to receive screw driving means, and a second end which, in use, directly or indirectly abuts the picture frame, wherein said second end is substantially planar and extends perpendicularly from the shank such that the diameter of the second end is equal to or greater than approximately 0.160 inches (4.06mm).
